# EUROPEAN PATENT APPLICATION

(11) **EP 4 404 659 A1**
(43) Date of publication of application: **24.07.2024**
(21) Application number: 22866789.5
(22) Date of filing: 13.09.2022
(51) Int. Cl.: H04W 72/04

(54) **RESOURCE SELECTION METHOD AND APPARATUS, AND USER EQUIPMENT**

(30) Priority: 13.09.2021 CN 202111070754
(71) Applicant: Vivo Mobile Communication Co., Ltd., Dongguan, Guangdong 523863 (CN)
(72) Inventor: WANG, Huan, Dongguan, Guangdong 523863 (CN); JI, Zichao, Dongguan, Guangdong 523863 (CN)
(74) Representative: Lavoix
(86) International application number: PCT/CN2022/118370
(87) International publication number: WO 2023/036328

(57) **Abstract**

This application pertains to the field of communications technologies, and discloses a resource selection method and apparatus, and a terminal. The method in embodiments of this application includes: obtaining a reserved resource of at least one target terminal, where the reserved resource includes a reserved receiving resource and a reserved transmitting resource, or the reserved resource includes a reserved receiving resource; and selecting a first resource based on the reserved resource, where the first resource is a resource used for communication transmission between a transmitting terminal and at least one receiving terminal.

## Description

### CROSS-REFERENCE TO RELATED APPLICATIONS

This application claims priority to Chinese Patent Application No. 202111070754.0, filed in China on September 13, 2021, which is incorporated herein by reference in its entirety.

### TECHNICAL FIELD

This application relates to the field of communications technologies, and in particular, to a resource selection method and apparatus, and a terminal.

### BACKGROUND

To transmit a physical sidelink control channel (Physical SideLink Control Channel, PSCCH) or physical sidelink shared channel (Physical SideLink Shared Channel, PSSCH) in a long term evolution (Long Term Evolution, LTE) or new radio (New Radio, NR) sidelink (SideLink, SL, also referred to as sidelink or side link or side-link), user equipment (User equipment, UE) reserves a transmission resource (transmission resource) before transmitting the PSCCH/PSSCH. When a transmitting terminal (TX UE) selects a transmission resource, the transmitting terminal avoids, by monitoring transmission resource reservation signaling of a proximity terminal (proximity UE), a transmission resource reserved by the proximity UE, to reduce mutual interference between the UEs. However, when the transmitting terminal selects the resource based on the reserved transmission resource, if there is a long distance between two transmitting terminals, the two transmitting terminals cannot monitor resource reservation signaling of each other, causing a hidden terminal problem. In other words, if a distance between two corresponding receiving terminals is short, the two receiving terminals suffer interference during reception, and it is difficult to ensure transmission reliability.

### SUMMARY

Embodiments of this application provide a resource selection method and apparatus, and a terminal to resolve a problem that a method for selecting a resource based on a reserved transmission resource by a transmitting terminal in the related art can hardly ensure transmission reliability.

According to a first aspect, a resource selection method is provided. The method is performed by a transmitting terminal and includes:
obtaining a reserved resource of at least one target terminal, where the reserved resource includes a reserved receiving resource and a reserved transmitting resource, or the reserved resource includes a reserved receiving resource; and
selecting a first resource based on the reserved resource, where the first resource is a resource used for communication transmission between the transmitting terminal and at least one receiving terminal.

According to a second aspect, a resource selection apparatus is provided. The apparatus is applied to a transmitting terminal and includes:
a first obtaining module, configured to obtain a reserved resource of at least one target terminal, where the reserved resource includes a reserved receiving resource and a reserved transmitting resource, or the reserved resource includes a reserved receiving resource; and
a first selection module, configured to select a first resource based on the reserved resource, where the first resource is a resource used for communication transmission between the transmitting terminal and at least one receiving terminal.

According to a third aspect, a terminal is provided. The terminal includes a processor, a memory, and a program or instructions stored in the memory and capable of running on the processor. When the program or instructions are executed by the processor, the steps of the method according to the first aspect are implemented.

According to a fourth aspect, a terminal is provided and includes a processor and a communication interface. The communication interface is configured to obtain a reserved resource of at least one target terminal, where the reserved resource includes a reserved receiving resource and a reserved transmitting resource, or the reserved resource includes a reserved receiving resource. The processor is configured to select a first resource based on the reserved resource, where the first resource is a resource used for communication transmission between the transmitting terminal and at least one receiving terminal.

According to a fifth aspect, a readable storage medium is provided. The readable storage medium stores a program or instructions. When the program or instructions are executed by a processor, the steps of the method according to the first aspect are implemented.

According to a sixth aspect, a chip is provided. The chip includes a processor and a communication interface. The communication interface is coupled to the processor. The processor is configured to run a program or instructions to implement the method according to the first aspect.

According to a seventh aspect, a computer program or program product is provided. The computer program or program product is stored in a non-transitory storage medium. The program or program product is executed by at least one processor to implement the steps of the method according to the first aspect.

According to an eighth aspect, a communication device is provided. The communication device is configured to perform the steps of the method according to the first aspect.

In the embodiments of this application, the transmitting terminal selects the resource based on the reserved receiving resource of the target terminal or based on the reserved receiving resource and reserved transmitting resource of the target terminal. Therefore, interference to reception on the receiving terminal can be effectively reduced, a hidden terminal problem is avoided, and further, transmission reliability can be effectively ensured.

### BRIEF DESCRIPTION OF DRAWINGS

FIG. 1 is a schematic flowchart of a resource selection method according to an embodiment of this application;
FIG. 2 is a schematic modular diagram of a resource selection apparatus according to an embodiment of this application;
FIG. 3 is a structural block diagram of a communication device according to an embodiment of this application; and
FIG. 4 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. In the following descriptions, a new radio (New Radio, NR) system is described for an illustrative purpose, and NR terms are used in most of the following descriptions. However, these technologies may also be applied to other applications than an NR system application, for example, a 6th Generation (6th Generation, 6G) communications system.

In the embodiments of this application, a terminal may also be referred to as a terminal device or user terminal (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a vehicular User Equipment (Vehicle User Equipment, VUE), a pedestrian User Equipment (Pedestrian User Equipment, PUE), or a smart home (a home device having a wireless communication function, such as a refrigerator, a television, a washing machine, or furniture). The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, a game console, or the like. It should be noted that a specific type of the terminal is not limited in the embodiments of this application.

A resource selection method provided in the embodiments of this application is hereinafter described in detail by using some embodiments and application scenarios thereof with reference to the accompanying drawings.

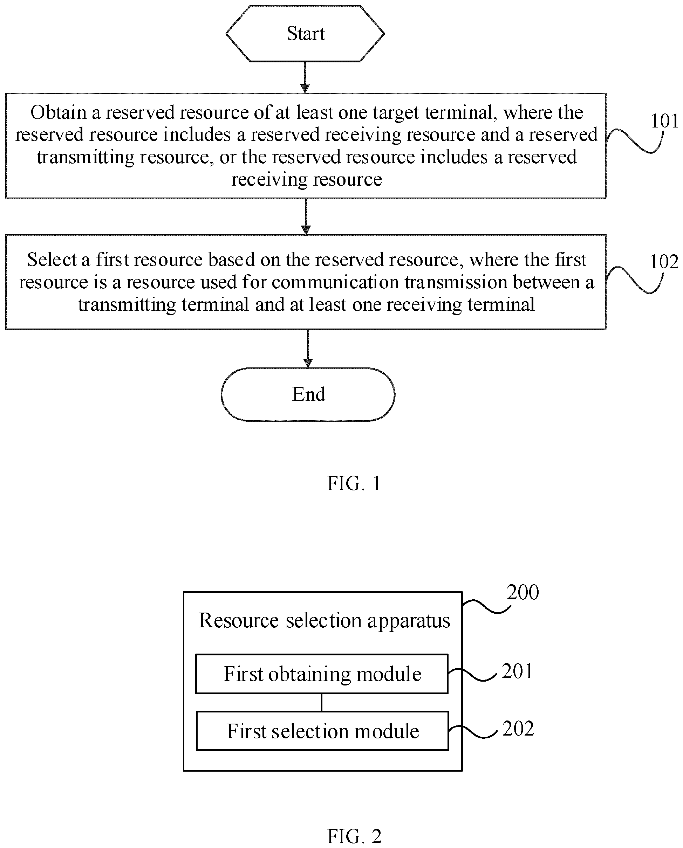

As shown in FIG. 1, an embodiment of this application provides a resource selection method. The method is performed by a transmitting terminal and includes the following steps.

Step 101: Obtain a reserved resource of at least one target terminal, where the reserved resource includes a reserved receiving resource and a reserved transmitting resource, or the reserved resource includes a reserved receiving resource.

The target terminal may be a terminal at a distance less than a preset threshold from the transmitting terminal, that is, a terminal in proximity to the transmitting terminal. The reserved resource includes at least a reserved receiving resource of the target terminal, and may further include a reserved transmitting resource of the target terminal.

Step 102: Select a first resource based on the reserved resource, where the first resource is a resource used for communication transmission between the transmitting terminal and at least one receiving terminal.

Specifically, during the resource selection, the first resource is obtained by excluding the reserved resource.

In this embodiment of this application, the transmitting terminal selects the resource based on the reserved receiving resource of the target terminal or based on the reserved receiving resource and reserved transmitting resource of the target terminal. Therefore, interference to reception on the receiving terminal can be effectively reduced, a hidden terminal problem is avoided, and further, transmission reliability can be effectively ensured.

Optionally, the selecting a first resource based on the reserved resource includes:
excluding a target reserved resource from a resource selection set to obtain remaining resources, where the target reserved resource is a reserved resource that meets a first preset condition; and
selecting the first resource based on the remaining resources.

Optionally, the first preset condition includes at least one of the following:
a degree of interference caused by the transmitting terminal to the reserved resource is greater than a preset interference threshold; and
a quality of service (Quality of Service, QoS) requirement corresponding to QoS information of information transmitted by the reserved resource is higher than a preset QoS requirement.

In other words, in this embodiment of this application, when performing the resource selection, the transmitting terminal needs to exclude or preferentially exclude a reserved resource with greater interference or a higher QoS requirement to avoid causing interference to reception on a proximity terminal.

Further, the method in this embodiment of this application further includes:
determining, based on a first parameter and a parameter threshold corresponding to the first parameter, the degree of interference caused by the transmitting terminal to the reserved resource, where
the first parameter includes one or more of the following:
   a distance between a terminal corresponding to the reserved resource and the transmitting terminal;
   an energy measurement value associated with the reserved resource; and
   a path loss measurement value between the terminal corresponding to the reserved resource and the transmitting terminal.

In this embodiment of this application, when the first parameter is the distance between the terminal corresponding to the reserved resource and the transmitting terminal, the parameter threshold may be specifically a preset distance threshold; when the first parameter is the energy measurement value associated with the reserved resource, the parameter threshold may be specifically a preset energy threshold; or when the first parameter is the path loss measurement value, the parameter threshold is specifically a preset path loss measurement threshold.

In addition, the parameter threshold is prescribed in a protocol, preconfigured, or determined according to a rule prescribed in a protocol. Alternatively, the parameter threshold may be adjusted according to a rule prescribed in a protocol to control a relative degree of interference or a quantity of excluded resources. For example, the threshold is gradually increased or reduced to exclude a reserved resource with a higher degree of interference.

Specifically, in this embodiment of this application, the degree of interference may be determined in the following three manners:
Manner 1: The degree of interference is determined based on the distance between the terminal corresponding to the reserved resource and the transmitting terminal. If the distance between the terminal corresponding to the reserved resource and the transmitting terminal is less than the preset distance threshold, it is determined that the degree of interference caused by the transmitting terminal to the reserved resource is higher; otherwise, it is determined that the degree of interference caused by the transmitting terminal to the reserved resource is lower.
   In the manner 1, reservation signaling corresponding to the reserved resource needs to carry terminal location information, such as a zone ID (zone ID) and an absolute location (absolute location).
Manner 2: The degree of interference is determined based on the energy measurement value associated with the reserved resource. If the energy measurement value associated with the reserved resource is greater than or equal to the preset energy threshold, it is determined that the degree of interference caused by the transmitting terminal to the reserved resource is higher; otherwise, it is determined that the degree of interference caused by the transmitting terminal to the reserved resource is lower.

The energy measurement value includes at least one of the following:
reference signal received power (Reference Signal Received Power, RSRP);
a received signal strength indicator (Received Signal Strength Indicator, RSSI);
reference signal received quality (Reference Signal Received Quality, RSRQ);
a signal to noise ratio (Signal to Noise Ratio, SNR); and
a signal to interference plus noise ratio (Signal to Interference plus Noise Ratio, SINR).

Manner 3: The degree of interference is determined based on the path loss measurement value between the terminal corresponding to the reserved resource and the transmitting terminal. If the path loss measurement value between the terminal corresponding to the reserved resource and the transmitting terminal is less than or equal to the preset path loss measurement threshold, it is determined that the degree of interference caused by the transmitting terminal to the reserved resource is higher; otherwise, it is determined that the degree of interference caused by the transmitting terminal to the reserved resource is lower.

For example, the transmitting terminal measures the energy measurement value associated with the reserved resource and obtains transmit power of a measurement signal, and calculates the path loss measurement value based on the energy measurement value and the transmit power.

Optionally, in the manner 3, reservation signaling corresponding to the reserved resource needs to carry transmit power information of the terminal.

In addition, when the first preset condition is that the quality of service QoS requirement corresponding to the QoS information of the information transmitted by the reserved resource is higher than the preset QoS requirement, the reservation signaling corresponding to the reserved resource needs to carry a QoS parameter of the information transmitted by the reserved resource, for example, a priority (priority).

Optionally, in this embodiment of this application, the excluding a target reserved resource from a resource selection set includes at least one of the following:
excluding the target reserved resource(s) from the resource set in descending order of degrees of interference, until a quantity of remaining resources meets a second preset condition; and
excluding the target reserved resource(s) from the resource set in descending order of QoS requirements corresponding to QoS information, until a quantity of remaining resources meets the second preset condition.

In this embodiment of this application, the second preset condition includes at least one of the following:
the quantity of the remaining resources is within a first preset range; and
a ratio of the quantity of the remaining resources to a quantity of resources in the resource set is within a second preset range.

Optionally, the excluding the target reserved resource(s) from the resource set includes:
adjusting at least one of a first parameter and a parameter threshold to obtain an adjusted degree of interference, where the degree of interference is determined based on the first parameter and the parameter threshold; and
excluding the target reserved resource from the resource set based on the adjusted degree of interference.

Further, the adjusting at least one of a first parameter and a parameter threshold includes:
adjusting at least one of the first parameter and the parameter threshold based on the quality of service QoS information of the information transmitted by the reserved resource.

For example, the distance measurement value is superimposed with an offset value or multiplied based on the QoS information, where the offset value or a multiplier is in non-negative correlation with the priority. For example, the higher the priority, the greater the offset value. Alternatively, the preset distance threshold may be superimposed with an offset value or multiplied, where the offset value or a multiplier is in negative correlation with the priority. For example, the higher the priority, the smaller the offset value.

For another example, the energy measurement value is superimposed with an offset value or multiplied based on the QoS information, where the offset value or a multiplier is in non-negative correlation with the priority. For example, the higher the priority, the greater the offset value. Alternatively, the preset energy threshold may be superimposed with an offset value or multiplied, where the offset value or a multiplier is in negative correlation with the priority. For example, the higher the priority, the smaller the offset value.

For another example, the path loss measurement value is superimposed with an offset value or multiplied based on the QoS information, where the offset value or a multiplier is in non-negative correlation with the priority. For example, the higher the priority, the greater the offset value. Alternatively, the preset path loss measurement threshold may be superimposed with an offset value or multiplied, where the offset value or a multiplier is in negative correlation with the priority. For example, the higher the priority, the smaller the offset value.

In this embodiment of this application, the degree of interference may be adjusted by adjusting at least one of the first parameter and the parameter threshold, and further, the quantity of the remaining resources may be controlled, so that a percentage of the quantity of the remaining resources in the resource set is within the preset range and that the quantity of the remaining resources is within the preset range.

Optionally, the reserved receiving resource is a reserved resource for at least one receive beam (or a transmit beam associated with the receive beam) or receive panel (or a transmit panel associated with the receive panel) of the receiving terminal.

Optionally, reservation signaling corresponding to the reserved receiving resource indicates resources reserved for a plurality of receive beams (or receive panels) respectively.

Optionally, in this embodiment of this application, a selection priority of a remaining resource is higher than a selection priority of a third resource set, and the third resource set is a resource set obtained by excluding the reserved transmitting resource from a resource selection set.

The resource selection set may be specifically a candidate resource set. When performing the resource selection based on the remaining resources, the transmitting terminal preferentially performs selection in a set of the remaining resources. If the quantity of the remaining resources is less than a preset quantity threshold, the transmitting terminal may further perform resource selection in the third resource set.

Optionally, in this embodiment of this application, the obtaining a reserved resource of at least one target terminal includes:
obtaining a monitoring result corresponding to a first transmit beam or a first transmit panel of the transmitting terminal, where the monitoring result includes the reserved resource of the at least one target terminal.

Further, the obtaining a monitoring result corresponding to a first transmit beam or a first transmit panel of the transmitting terminal includes:
monitoring the reserved resource based on a first target transmit beam or a first target transmit panel to obtain the monitoring result corresponding to the first transmit beam or the first transmit panel, where the first target transmit beam is a beam related to the first transmit beam, and the first target transmit panel is a transmit panel related to the first transmit panel.

Optionally, coverage corresponding to the first target transmit beam is greater than or equal to coverage corresponding to the first transmit beam, and coverage corresponding to the first target transmit panel is greater than or equal to coverage corresponding to the first transmit panel. For example, the first target transmit beam is an omnidirectional beam, and the first transmit panel includes all transmit panels.

In this embodiment of this application, the transmitting terminal monitors the reserved resource based on the transmit beam or transmit panel (or the receive beam or receive panel associated with the transmit beam or panel), and selects a corresponding transmission resource for a transport block (Transport Block, TB) on the transmit beam or transmit panel based on the monitoring result. Because transmission may be performed between terminals by using a directional beam, the first resource is selected with reference to the first transmit beam or the first transmit panel herein. Therefore, higher spatial resource utilization can be implemented.

Optionally, before the obtaining a monitoring result corresponding to a first transmit beam or a first transmit panel of the transmitting terminal, the method further includes:
determining a beam or panel used for communication between the transmitting terminal and the receiving terminal; and
determining the first transmit beam or the first transmit panel based on the beam or panel used for communication between the transmitting terminal and the receiving terminal.

In an embodiment of this application, the beam or panel used for communication between the transmitting terminal and the receiving terminal may be determined in the following manners:
Manner 1: The transmitting terminal determines a beam or panel that the transmitting terminal tends to use or notifies the receiving terminal of the beam or panel that the transmitting terminal tends to use.
Manner 2: The receiving terminal determines a beam or panel that the receiving terminal tends to use or notifies the transmitting terminal of the beam or panel that the receiving terminal tends to use.

The beam or panel used for communication between the receiving terminal and the transmitting terminal may include at least one.

Optionally, in this embodiment of this application, the selecting a first resource based on the reserved resource includes:
selecting X first resources based on monitoring results corresponding to N first transmit beams or first transmit panels, where X is a positive integer, X is less than or equal to N, N is a positive integer, and each first resource corresponds to at least one monitoring result.

In this embodiment of this application, if there are N (potentially used) first transmit beams or first transmit panels between the transmitting terminal and the receiving terminal, when the transmitting terminal selects a resource for a transport block (Transport Block, TB), the transmitting terminal selects X resources for the N first transmit beams or first transmit panels.

A value of X is prescribed in a protocol, preconfigured, or determined by the terminal.

Further, the selecting X first resources based on monitoring results corresponding to N first transmit beams or first transmit panels includes:
determining one first resource based on a monitoring result corresponding to each first transmit beam or first transmit panel; and
determining the X first resources based on first resources determined by the monitoring results corresponding to the N first transmit beams or first transmit panels.

Herein, one first resource is independently determined based on the monitoring result corresponding to each first transmit beam or first transmit panel. In addition, because there is an overlapping resource among the N first resources independently determined based on the N monitoring results, X is less than or equal to N.

In addition, in this embodiment of this application, the transmitting terminal may alternatively determine one first resource with reference to monitoring results corresponding to a plurality of first transmit beams or first transmit panels. For example, there are five first transmit beams or first transmit panels, and the five first transmit beams or first transmit panels correspond to five monitoring results. The transmitting terminal determines one first resource based on monitoring results 1 and 2, determines one first resource based on monitoring results 3 and 4, and determines one first resource based on monitoring result 5. Finally, three first resources are determined.

In a specific embodiment of this application, the value of X is 1. In other words, for a transmission of a TB, the transmitting terminal selects one first resource based on the monitoring results corresponding to the N first transmit beams or first transmit panels, to reduce resource utilization.

Optionally, the selecting a first resource based on the reserved resource includes:
selecting, based on the monitoring result and a target transmitting resource, the first resource for transmitting a target transport block, where
the target transmitting resource includes at least one of a first transmitting resource and a second transmitting resource;
the first transmitting resource is a resource for transmitting a first transport block, the first transport block is a transport block other than the target transport block among transport blocks corresponding to a second target transmit beam or a second target transmit panel, and the second target transmit beam or the second target transmit panel is a transmit beam or a transmit panel corresponding to the target transport block; and
the second transmitting resource is a resource for transmitting a second transport block, the second transport block is a transport block other than the target transport block among transport blocks corresponding to a third target transmit beam or a third target transmit panel, the third target transmit beam is a transmit beam other than the second target transmit beam among transmit beams corresponding to the transmitting terminal, and the third target transmit panel is a transmit panel other than the second transmit panel among transmit panels corresponding to the transmitting terminal.

In this embodiment of this application, if there is one or more (potentially available) first receive beams or first receive panels between the receiving terminal and the transmitting terminal, when the receiving terminal selects receiving resources for a plurality of transport blocks, for reception of a TB, when the transmitting terminal selects corresponding resources for L first transmit beams or first transmit panels corresponding to the TB, the transmitting terminal excludes time-frequency resources selected by the L first transmit beams or first transmit panels for other TBs, and/or excludes time-frequency resources selected for other TBs by other first transmit beams and other first transmit panels than the L first transmit beams or first transmit panels.

Further, the method in this embodiment of this application further includes:
determining whether space division multiplexing can be performed on the third target transmit beam (third target transmit panel) and the second target transmit beam (second target transmit panel); and in a case that space division multiplexing cannot be performed, performing, based on the monitoring result and the target transmitting resource, the operation of selecting the first resource for transmitting the target transport block.

It should be noted that the resource exclusion may occur before the candidate resource set is identified or when a transmission resource is selected from the candidate resource set. In this way, interference between a plurality of TB transmissions can be reduced. The following is a description of the candidate resource set.

There are two NR SL resource allocation modes in the related art: One mode (mode (mode) 1) is based on base station scheduling, and the other mode (mode 2) is based on autonomous resource selection by UE. For mode 2, a specific working mode is as follows: (1) TX UE first determines a resource selection window after resource selection is triggered, where a lower boundary of the resource selection window is at a time T1 after the resource selection is triggered, and an upper boundary of the resource selection window is at a time T2 after the triggering, where T2 is a value selected by a UE implementation in a packet delay budget (Packet Delay Budget, PDB) of a TB transmission of the UE, and T2 is not earlier than T1. (2) Before the resource selection, the UE needs to determine a candidate resource set (candidate resource set) for the resource selection, and compare reference signal received power (Reference Signal Received Power, RSRP) measured on a resource in the resource selection window with a corresponding RSRP threshold (threshold). If the RSRP is higher than the RSRP threshold, the resource is excluded and cannot be included in the candidate resource set. After resource exclusion, remaining resources in the resource selection window form a candidate resource set. A percentage of resources in the candidate resource set to resources in the resource selection window needs to be not less than x%. If the percentage is less than x%, the RSRP threshold needs to be increased based on a step value (3 dB), and then a resource exclusion operation is performed again, until no less than x% of the resources can be selected. After the candidate resource set is determined, the UE randomly selects a transmission resource from the candidate resource set. In addition, the UE may reserve a transmission resource in the current transmission for a subsequent transmission.

Optionally, the excluding a target reserved resource from a resource selection set to obtain remaining resources includes:
manner 1: excluding a target reserved receiving resource from the resource selection set to obtain a first resource set, excluding a target reserved transmitting resource from the resource selection set to obtain a second resource set, and obtaining the remaining resources based on the first resource set and the second resource set; or
manner 2: excluding both a target reserved receiving resource and a target reserved transmitting resource from the resource selection set to obtain the remaining resources; or
manner 3: excluding a target reserved receiving resource from a resource set to obtain a first resource set, and excluding a target reserved transmitting resource from the first resource set to obtain the remaining resources; or
manner 4: excluding a target reserved transmitting resource from a resource set to obtain a second resource set, and excluding a target reserved receiving resource from the second resource set to obtain the remaining resources.

In this embodiment of this application, in the foregoing manner 1, the remaining resources may be obtained based on a combination or union of the first resource set and the second resource set.

In the foregoing manner 2, excluding the target reserved transmitting resource and excluding the target reserved receiving resource are performed simultaneously to obtain the remaining resources, and the first resource is selected from the remaining resources. For example, resource exclusion is performed based on an RSRP measurement value associated with the target reserved resource (target reserved transmitting resource and target reserved receiving resource) and a priority indication of information transmitted on the target reserved resource. Specifically, when the RSRP measurement value associated with the target reserved resource is greater than a preset RSRP measurement threshold (the RSRP measurement threshold is related to the priority), the target reserved resource is excluded. RSRP measurement thresholds corresponding to the target reserved receiving resource and the target reserved transmitting resource are the same or there is a preset difference. Herein, the preset difference between the RSRP measurement thresholds can control preferential exclusion of the target reserved transmitting resource or the target reserved receiving resource.

In the resource selection method in this embodiment of this application, the transmitting terminal selects the resource based on the reserved receiving resource of the target terminal or based on the reserved receiving resource and reserved transmitting resource of the target terminal. Therefore, interference to reception on the receiving terminal can be effectively reduced, a hidden terminal problem is avoided, and further, transmission reliability can be effectively ensured.

It should be noted that the resource selection method provided in this embodiment of this application may be performed by a resource selection apparatus, or a control module for performing the resource selection method in the resource selection apparatus. A resource selection apparatus provided in an embodiment of this application is described by assuming that the resource selection apparatus performs the resource selection method in this embodiment of this application.

As shown in FIG. 2, an embodiment of this application provides a resource selection apparatus 200. The apparatus is applied to a transmitting terminal and includes:
a first obtaining module 201, configured to obtain a reserved resource of at least one target terminal, where the reserved resource includes a reserved receiving resource and a reserved transmitting resource, or the reserved resource includes a reserved receiving resource; and
a first selection module 202, configured to select a first resource based on the reserved resource, where the first resource is a resource used for communication transmission between the transmitting terminal and at least one receiving terminal.

Optionally, the first selection module includes:
a first obtaining submodule, configured to exclude a target reserved resource from a resource selection set to obtain remaining resources, where the target reserved resource is a reserved resource that meets a first preset condition; and
a first selection submodule, configured to select the first resource based on the remaining resources.

Optionally, the first obtaining submodule is configured to: exclude a target reserved receiving resource from the resource selection set to obtain a first resource set, exclude a target reserved transmitting resource from the resource selection set to obtain a second resource set, and obtain the remaining resources based on the first resource set and the second resource set; or
exclude both a target reserved receiving resource and a target reserved transmitting resource from the resource selection set to obtain the remaining resources; or
exclude a target reserved receiving resource from a resource set to obtain a first resource set, and exclude a target reserved transmitting resource from the first resource set to obtain the remaining resources; or
exclude a target reserved transmitting resource from a resource set to obtain a second resource set, and exclude a target reserved receiving resource from the second resource set to obtain the remaining resources.

Optionally, the first preset condition includes at least one of the following:
a degree of interference caused by the transmitting terminal to the reserved resource is greater than a preset interference threshold; and
a quality of service QoS requirement corresponding to QoS information of information transmitted by the reserved resource is higher than a preset QoS requirement.

Optionally, the apparatus in this embodiment of this application further includes:
a first determining module, configured to determine, based on a first parameter and a parameter threshold corresponding to the first parameter, the degree of interference caused by the transmitting terminal to the reserved resource, where
the first parameter includes one or more of the following:
   a distance between a terminal corresponding to the reserved resource and the transmitting terminal;
   an energy measurement value associated with the reserved resource; and
   a path loss measurement value between the terminal corresponding to the reserved resource and the transmitting terminal.

Optionally, the first obtaining submodule is configured to perform at least one of the following:
excluding the target reserved resource(s) from the resource set in descending order of degrees of interference, until a quantity of remaining resources meets a second preset condition; and
excluding the target reserved resource(s) from the resource set in descending order of QoS requirements corresponding to QoS information, until a quantity of remaining resources meets the second preset condition.

Optionally, the first obtaining submodule includes:
a second obtaining submodule, configured to adjust at least one of a first parameter and a parameter threshold to obtain an adjusted degree of interference, where the degree of interference is determined based on the first parameter and the parameter threshold; and
a first excluding submodule, configured to exclude the target reserved resource from the resource set based on the adjusted degree of interference.

Optionally, the second preset condition includes at least one of the following:
the quantity of the remaining resources is within a first preset range; and
a ratio of the quantity of the remaining resources to a quantity of resources in the resource set is within a second preset range.

Optionally, the second obtaining submodule is configured to adjust at least one of the first parameter and the parameter threshold based on the quality of service QoS information of the information transmitted by the reserved resource.

Optionally, the reserved receiving resource is a reserved resource for at least one receive beam or receive panel of the receiving terminal.

Optionally, a selection priority of a remaining resource is higher than a selection priority of a third resource set, and the third resource set is a resource set obtained by excluding the reserved transmitting resource from a resource selection set.

Optionally, the first obtaining module is configured to obtain a monitoring result corresponding to a first transmit beam or a first transmit panel of the transmitting terminal, where the monitoring result includes the reserved resource of the at least one target terminal.

Optionally, the first obtaining module is configured to monitor the reserved resource based on a first target transmit beam or a first target transmit panel to obtain the monitoring result corresponding to the first transmit beam or the first transmit panel, where the first target transmit beam is a beam related to the first transmit beam, and the first target transmit panel is a transmit panel related to the first transmit panel.

Optionally, the apparatus in this embodiment of this application further includes:
a second determining module, configured to determine a beam or panel used for communication between the transmitting terminal and the receiving terminal before the first obtaining module obtains the monitoring result corresponding to the first transmit beam or the first transmit panel of the transmitting terminal; and
a third determining module, configured to determine the first transmit beam or the first transmit panel based on the beam or panel used for communication between the transmitting terminal and the receiving terminal.

Optionally, the first selection module is configured to select X first resources based on monitoring results corresponding to N first transmit beams or first transmit panels, where X is a positive integer, X is less than or equal to N, N is a positive integer, and each first resource corresponds to at least one monitoring result.

Optionally, a value of X is prescribed in a protocol, preconfigured, or determined by the terminal.

Optionally, the first selection module includes:
a first determining submodule, configured to determine one first resource based on a monitoring result corresponding to each first transmit beam or first transmit panel; and
a second determining submodule, configured to determine the X first resources based on first resources determined by the monitoring results corresponding to the N first transmit beams or first transmit panels.

Optionally, the first selection module is configured to select, based on the monitoring result and a target transmitting resource, the first resource for transmitting a target transport block, where
the target transmitting resource includes at least one of a first transmitting resource and a second transmitting resource;
the first transmitting resource is a resource for transmitting a first transport block, the first transport block is a transport block other than the target transport block among transport blocks corresponding to a second target transmit beam or a second target transmit panel, and the second target transmit beam or the second target transmit panel is a transmit beam or a transmit panel corresponding to the target transport block; and
the second transmitting resource is a resource for transmitting a second transport block, the second transport block is a transport block other than the target transport block among transport blocks corresponding to a third target transmit beam or a third target transmit panel, the third target transmit beam is a transmit beam other than the second target transmit beam among transmit beams corresponding to the transmitting terminal, and the third target transmit panel is a transmit panel other than the second transmit panel among transmit panels corresponding to the transmitting terminal.

In this embodiment of this application, the transmitting terminal selects the resource based on the reserved receiving resource of the target terminal or based on the reserved receiving resource and reserved transmitting resource of the target terminal. Therefore, interference to reception on the receiving terminal can be effectively reduced, a hidden terminal problem is avoided, and further, transmission reliability can be effectively ensured.

The resource selection apparatus in this embodiment of this application may be an apparatus, or an apparatus or an electronic device with an operating system, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The apparatus provided in this embodiment of this application can implement each process implemented by the method embodiment in FIG. 1, with the same technical effect achieved. To avoid repetition, details are not described herein again.

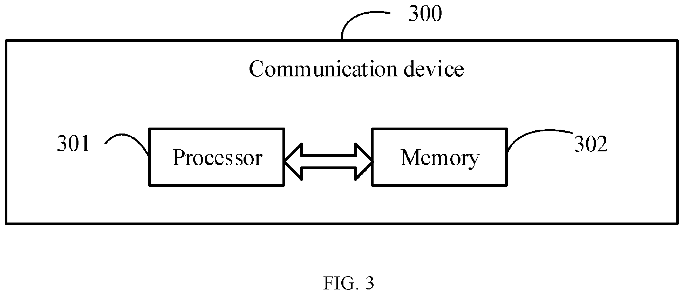

Optionally, as shown in FIG. 3, an embodiment of this application further provides a communication device 300, including a processor 301, a memory 302, and a program or instructions stored in the memory 302 and capable of running on the processor 301. For example, when the communication device 300 is a transmitting terminal, and the program or instructions are executed by the processor 301, each process of the foregoing embodiment of the resource selection method applied to the transmitting terminal is implemented, with the same technical effect achieved. To avoid repetition, details are not described herein again.

An embodiment of this application further provides a terminal. The terminal includes a processor and a communication interface. The communication interface is configured to obtain a reserved resource of at least one target terminal, where the reserved resource includes a reserved receiving resource and a reserved transmitting resource, or the reserved resource includes a reserved receiving resource. The processor is configured to select a first resource based on the reserved resource, where the first resource is a resource used for communication transmission between the transmitting terminal and at least one receiving terminal.

The terminal embodiment corresponds to the foregoing terminal-side method embodiment, and each implementation process and implementation of the foregoing method embodiment can be applied to the terminal embodiment, with the same technical effect achieved.

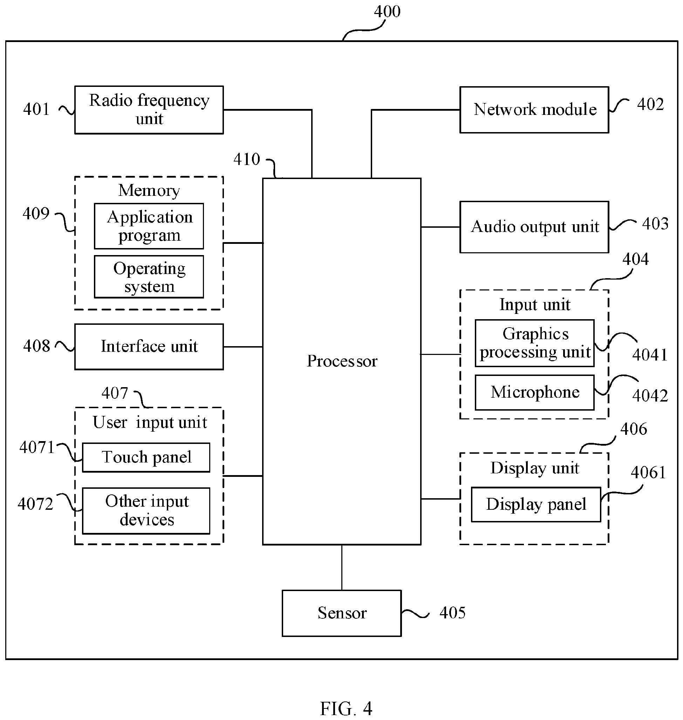

Specifically, FIG. 4 is a schematic diagram of a hardware structure of a terminal (the foregoing transmitting terminal) for implementing an embodiment of this application. The terminal 400 includes but is not limited to at least some components such as a radio frequency unit 401, a network module 402, an audio output unit 403, an input unit 404, a sensor 405, a display unit 406, a user input unit 407, an interface unit 408, a memory 409, and a processor 410.

A person skilled in the art may understand that the terminal 400 may further include a power supply (for example, a battery) supplying power to all components. The power supply may be logically connected to the processor 410 through a power management system. In this way, functions such as charge management, discharge management, and power consumption management are implemented by using the power management system. The terminal structure shown in FIG. 4 does not constitute a limitation on the terminal. The terminal may include more or fewer components than those shown in the figure, or some components are combined, or component arrangements are different. Details are not described herein again.

It should be understood that, in this embodiment of this application, the input unit 404 may include a graphics processing unit (Graphics Processing Unit, GPU) 4041 and a microphone 4042. The graphics processing unit 4041 processes image data of a still picture or video obtained by an image capture apparatus (such as a camera) in a video capture mode or an image capture mode. The display unit 406 may include a display panel 4061, and the display panel 4061 may be configured in a form of a liquid crystal display, an organic light-emitting diode, or the like. The user input unit 407 includes a touch panel 4071 and other input devices 4072. The touch panel 4071 is also referred to as a touchscreen. The touch panel 4071 may include two parts: a touch detection apparatus and a touch controller. The other input devices 4072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 401 sends the downlink data to the processor 410 for processing, and in addition, sends uplink data to the network-side device. Generally, the radio frequency unit 401 includes but is not limited to an antenna, at least one amplifier, a transceiver, a coupler, a low noise amplifier, a duplexer, and the like.

The memory 409 may be configured to store software programs or instructions and various data. The memory 409 may primarily include a program or instruction storage area and a data storage area. The program or instruction storage area may store an operating system, an application program or instructions (such as an audio play function and an image play function) required by at least one function, and the like. In addition, the memory 409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 410 may include one or more processing units. Optionally, the processor 410 may integrate an application processor and a modem processor. The application processor mainly processes the operating system, a user interface, an application program or an instruction, and the like. The modem processor mainly processes wireless communication. For example, the modem processor is a baseband processor. It may be understood that the modem processor may alternatively not be integrated in the processor 410.

The processor 410 is configured to: obtain a reserved resource of at least one target terminal by using the radio frequency unit 401, where the reserved resource includes a reserved receiving resource and a reserved transmitting resource, or the reserved resource includes a reserved receiving resource; and select a first resource based on the reserved resource, where the first resource is a resource used for communication transmission between the transmitting terminal and at least one receiving terminal.

Optionally, the selecting, by the processor 410, a first resource based on the reserved resource includes:
excluding a target reserved resource from a resource selection set to obtain remaining resources, where the target reserved resource is a reserved resource that meets a first preset condition; and selecting the first resource based on the remaining resources.

Optionally, the excluding, by the processor 410, a target reserved resource from a resource selection set to obtain remaining resources includes:
excluding a target reserved receiving resource from the resource selection set to obtain a first resource set, excluding a target reserved transmitting resource from the resource selection set to obtain a second resource set, and obtaining the remaining resources based on the first resource set and the second resource set; or
excluding both a target reserved receiving resource and a target reserved transmitting resource from the resource selection set to obtain the remaining resources; or
excluding a target reserved receiving resource from a resource set to obtain a first resource set, and excluding a target reserved transmitting resource from the first resource set to obtain the remaining resources; or
excluding a target reserved transmitting resource from a resource set to obtain a second resource set, and excluding a target reserved receiving resource from the second resource set to obtain the remaining resources.

Optionally, the first preset condition includes at least one of the following:
a degree of interference caused by the transmitting terminal to the reserved resource is greater than a preset interference threshold; and
a quality of service QoS requirement corresponding to QoS information of information transmitted by the reserved resource is higher than a preset QoS requirement.

Optionally, the processor 410 is further configured to:
determine, based on a first parameter and a parameter threshold corresponding to the first parameter, the degree of interference caused by the transmitting terminal to the reserved resource, where
the first parameter includes one or more of the following:
   a distance between a terminal corresponding to the reserved resource and the transmitting terminal;
   an energy measurement value associated with the reserved resource; and
   a path loss measurement value between the terminal corresponding to the reserved resource and the transmitting terminal.

Optionally, the excluding, by the processor 410, a target reserved resource from a resource selection set includes at least one of the following:
excluding the target reserved resource(s) from the resource set in descending order of degrees of interference, until a quantity of remaining resources meets a second preset condition; and
excluding the target reserved resource(s) from the resource set in descending order of QoS requirements corresponding to QoS information, until a quantity of remaining resources meets the second preset condition.

Optionally, the excluding, by the processor 410, the target reserved resource(s) from the resource set includes:
adjusting at least one of a first parameter and a parameter threshold to obtain an adjusted degree of interference, where the degree of interference is determined based on the first parameter and the parameter threshold; and
excluding the target reserved resource from the resource set based on the adjusted degree of interference.

Optionally, the second preset condition includes at least one of the following:
the quantity of the remaining resources is within a first preset range; and
a ratio of the quantity of the remaining resources to a quantity of resources in the resource set is within a second preset range.

Further, the adjusting, by the processor 410, at least one of a first parameter and a parameter threshold includes:
adjusting at least one of the first parameter and the parameter threshold based on the quality of service QoS information of the information transmitted by the reserved resource.

Optionally, the reserved receiving resource is a reserved resource for at least one receive beam or receive panel of the receiving terminal.

Optionally, a selection priority of a remaining resource is higher than a selection priority of a third resource set, and the third resource set is a resource set obtained by excluding the reserved transmitting resource from a resource selection set.

Optionally, the obtaining, by the processor 410, a reserved resource of at least one target terminal by using the radio frequency unit includes:
obtaining a monitoring result corresponding to a first transmit beam or a first transmit panel of the transmitting terminal, where the monitoring result includes the reserved resource of the at least one target terminal.

Optionally, the obtaining, by the processor 410, a monitoring result corresponding to a first transmit beam or a first transmit panel of the transmitting terminal by using the radio frequency unit includes:
monitoring the reserved resource based on a first target transmit beam or a first target transmit panel to obtain the monitoring result corresponding to the first transmit beam or the first transmit panel, where the first target transmit beam is a beam related to the first transmit beam, and the first target transmit panel is a transmit panel related to the first transmit panel.

Optionally, before the processor 410 obtains the monitoring result corresponding to the first transmit beam or the first transmit panel of the transmitting terminal by using the radio frequency unit, the processor 410 is further configured to:
determine a beam or panel used for communication between the transmitting terminal and the receiving terminal; and
determine the first transmit beam or the first transmit panel based on the beam or panel used for communication between the transmitting terminal and the receiving terminal.

Optionally, the selecting, by the processor 410, a first resource based on the reserved resource includes:
selecting X first resources based on monitoring results corresponding to N first transmit beams or first transmit panels, where X is a positive integer, X is less than or equal to N, N is a positive integer, and each first resource corresponds to at least one monitoring result.

Optionally, a value of X is prescribed in a protocol, preconfigured, or determined by the terminal.

Optionally, the selecting, by the processor 410, X first resources based on monitoring results corresponding to N first transmit beams or first transmit panels includes:
determining one first resource based on a monitoring result corresponding to each first transmit beam or first transmit panel; and
determining the X first resources based on first resources determined by the monitoring results corresponding to the N first transmit beams or first transmit panels.

Optionally, the selecting, by the processor 410, a first resource based on the reserved resource includes:
selecting, based on the monitoring result and a target transmitting resource, the first resource for transmitting a target transport block, where
the target transmitting resource includes at least one of a first transmitting resource and a second transmitting resource;
the first transmitting resource is a resource for transmitting a first transport block, the first transport block is a transport block other than the target transport block among transport blocks corresponding to a second target transmit beam or a second target transmit panel, and the second target transmit beam or the second target transmit panel is a transmit beam or a transmit panel corresponding to the target transport block; and
the second transmitting resource is a resource for transmitting a second transport block, the second transport block is a transport block other than the target transport block among transport blocks corresponding to a third target transmit beam or a third target transmit panel, the third target transmit beam is a transmit beam other than the second target transmit beam among transmit beams corresponding to the transmitting terminal, and the third target transmit panel is a transmit panel other than the second transmit panel among transmit panels corresponding to the transmitting terminal.

In this embodiment of this application, the transmitting terminal selects the resource based on the reserved receiving resource of the target terminal or based on the reserved receiving resource and reserved transmitting resource of the target terminal. Therefore, interference to reception on the receiving terminal can be effectively reduced, a hidden terminal problem is avoided, and further, transmission reliability can be effectively ensured.

An embodiment of this application further provides a readable storage medium. The readable storage medium may be volatile or non-volatile. The readable storage medium stores a program or instructions. When the program or instructions are executed by a processor, each process of the foregoing embodiment of the resource selection method is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the resource selection method, with the same technical effect achieved. To avoid repetition, details are not described herein again.

An embodiment of this application further provides a computer program or program product. The computer program or program product is stored in a non-transitory storage medium. The program or program product is executed by at least one processor to implement the steps of the foregoing resource selection method.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A resource selection method, performed by a transmitting terminal and comprising:
obtaining a reserved resource of at least one target terminal, wherein the reserved resource comprises a reserved receiving resource and a reserved transmitting resource, or the reserved resource comprises a reserved receiving resource; and
selecting a first resource based on the reserved resource, wherein the first resource is a resource used for communication transmission between the transmitting terminal and at least one receiving terminal.

2. The method according to claim 1, wherein the selecting a first resource based on the reserved resource comprises:
excluding a target reserved resource from a resource selection set to obtain remaining resources, wherein the target reserved resource is a reserved resource that meets a first preset condition; and
selecting the first resource based on the remaining resources.

3. The method according to claim 2, wherein the excluding a target reserved resource from a resource selection set to obtain remaining resources comprises:
excluding a target reserved receiving resource from the resource selection set to obtain a first resource set, excluding a target reserved transmitting resource from the resource selection set to obtain a second resource set, and obtaining the remaining resources based on the first resource set and the second resource set; or
excluding both a target reserved receiving resource and a target reserved transmitting resource from the resource selection set to obtain the remaining resources; or
excluding a target reserved receiving resource from a resource set to obtain a first resource set, and excluding a target reserved transmitting resource from the first resource set to obtain the remaining resources; or
excluding a target reserved transmitting resource from a resource set to obtain a second resource set, and excluding a target reserved receiving resource from the second resource set to obtain the remaining resources.

4. The method according to claim 2, wherein the first preset condition comprises at least one of the following:
a degree of interference caused by the transmitting terminal to the reserved resource is greater than a preset interference threshold; and
a quality of service QoS requirement corresponding to QoS information of information transmitted by the reserved resource is higher than a preset QoS requirement.

5. The method according to claim 4, further comprising:
determining, based on a first parameter and a parameter threshold corresponding to the first parameter, the degree of interference caused by the transmitting terminal to the reserved resource, wherein
the first parameter comprises one or more of the following:
a distance between a terminal corresponding to the reserved resource and the transmitting terminal;
an energy measurement value associated with the reserved resource; and
a path loss measurement value between the terminal corresponding to the reserved resource and the transmitting terminal.

6. The method according to claim 4, wherein the excluding a target reserved resource from a resource selection set comprises at least one of the following:
excluding the target reserved resource(s) from the resource set in descending order of degrees of interference, until a quantity of remaining resources meets a second preset condition; and
excluding the target reserved resource(s) from the resource set in descending order of QoS requirements corresponding to QoS information, until a quantity of remaining resources meets the second preset condition.

7. The method according to claim 6, wherein the excluding the target reserved resource(s) from the resource set comprises:
adjusting at least one of a first parameter and a parameter threshold to obtain an adjusted degree of interference, wherein the degree of interference is determined based on the first parameter and the parameter threshold; and
excluding the target reserved resource from the resource set based on the adjusted degree of interference.

8. The method according to claim 6, wherein the second preset condition comprises at least one of the following:
the quantity of the remaining resources is within a first preset range; and
a ratio of the quantity of the remaining resources to a quantity of resources in the resource set is within a second preset range.

9. The method according to claim 7, wherein the adjusting at least one of a first parameter and a parameter threshold comprises:
adjusting at least one of the first parameter and the parameter threshold based on the quality of service QoS information of the information transmitted by the reserved resource.

10. The method according to claim 1, wherein the reserved receiving resource is a reserved resource for at least one receive beam or receive panel of the receiving terminal.

11. The method according to claim 1, wherein a selection priority of a remaining resource is higher than a selection priority of a third resource set, and the third resource set is a resource set obtained by excluding the reserved transmitting resource from a resource selection set.

12. The method according to claim 1, wherein the obtaining a reserved resource of at least one target terminal comprises:
obtaining a monitoring result corresponding to a first transmit beam or a first transmit panel of the transmitting terminal, wherein the monitoring result comprises the reserved resource of the at least one target terminal.

13. The method according to claim 12, wherein the obtaining a monitoring result corresponding to a first transmit beam or a first transmit panel of the transmitting terminal comprises:
monitoring the reserved resource based on a first target transmit beam or a first target transmit panel to obtain the monitoring result corresponding to the first transmit beam or the first transmit panel, wherein the first target transmit beam is a beam related to the first transmit beam, and the first target transmit panel is a transmit panel related to the first transmit panel.

14. The method according to claim 12, wherein before the obtaining a monitoring result corresponding to a first transmit beam or a first transmit panel of the transmitting terminal, the method further comprises:
determining a beam or panel used for communication between the transmitting terminal and the receiving terminal; and
determining the first transmit beam or the first transmit panel based on the beam or panel used for communication between the transmitting terminal and the receiving terminal.

15. The method according to claim 12, wherein the selecting a first resource based on the reserved resource comprises:
selecting X first resources based on monitoring results corresponding to N first transmit beams or first transmit panels, wherein X is a positive integer, X is less than or equal to N, N is a positive integer, and each first resource corresponds to at least one monitoring result.

16. The method according to claim 15, wherein a value of X is prescribed in a protocol, preconfigured, or determined by the terminal.

17. The method according to claim 15, wherein the selecting X first resources based on monitoring results corresponding to N first transmit beams or first transmit panels comprises:
determining one first resource based on a monitoring result corresponding to each first transmit beam or first transmit panel; and
determining the X first resources based on first resources determined by the monitoring results corresponding to the N first transmit beams or first transmit panels.

18. The method according to claim 12, wherein the selecting a first resource based on the reserved resource comprises:
selecting, based on the monitoring result and a target transmitting resource, the first resource for transmitting a target transport block, wherein
the target transmitting resource comprises at least one of a first transmitting resource and a second transmitting resource;
the first transmitting resource is a resource for transmitting a first transport block, the first transport block is a transport block other than the target transport block among transport blocks corresponding to a second target transmit beam or a second target transmit panel, and the second target transmit beam or the second target transmit panel is a transmit beam or a transmit panel corresponding to the target transport block; and
the second transmitting resource is a resource for transmitting a second transport block, the second transport block is a transport block other than the target transport block among transport blocks corresponding to a third target transmit beam or a third target transmit panel, the third target transmit beam is a transmit beam other than the second target transmit beam among transmit beams corresponding to the transmitting terminal, and the third target transmit panel is a transmit panel other than the second transmit panel among transmit panels corresponding to the transmitting terminal.

19. A resource selection apparatus, applied to a transmitting terminal and comprising:
a first obtaining module, configured to obtain a reserved resource of at least one target terminal, wherein the reserved resource comprises a reserved receiving resource and a reserved transmitting resource, or the reserved resource comprises a reserved receiving resource; and
a first selection module, configured to select a first resource based on the reserved resource, wherein the first resource is a resource used for communication transmission between the transmitting terminal and at least one receiving terminal.

20. The apparatus according to claim 19, wherein the first selection module comprises:
a first obtaining submodule, configured to exclude a target reserved resource from a resource selection set to obtain remaining resources, wherein the target reserved resource is a reserved resource that meets a first preset condition; and
a first selection submodule, configured to select the first resource based on the remaining resources.

21. The apparatus according to claim 20, wherein the first obtaining submodule is configured to: exclude a target reserved receiving resource from the resource selection set to obtain a first resource set, exclude a target reserved transmitting resource from the resource selection set to obtain a second resource set, and obtain the remaining resources based on the first resource set and the second resource set; or
exclude both a target reserved receiving resource and a target reserved transmitting resource from the resource selection set to obtain the remaining resources; or
exclude a target reserved receiving resource from a resource set to obtain a first resource set, and exclude a target reserved transmitting resource from the first resource set to obtain the remaining resources; or
exclude a target reserved transmitting resource from a resource set to obtain a second resource set, and exclude a target reserved receiving resource from the second resource set to obtain the remaining resources.

22. The apparatus according to claim 20, wherein the first preset condition comprises at least one of the following:
a degree of interference caused by the transmitting terminal to the reserved resource is greater than a preset interference threshold; and
a quality of service QoS requirement corresponding to QoS information of information transmitted by the reserved resource is higher than a preset QoS requirement.

23. The apparatus according to claim 22, further comprising:
a first determining module, configured to determine, based on a first parameter and a parameter threshold corresponding to the first parameter, the degree of interference caused by the transmitting terminal to the reserved resource, wherein
the first parameter comprises one or more of the following:
a distance between a terminal corresponding to the reserved resource and the transmitting terminal;
an energy measurement value associated with the reserved resource; and
a path loss measurement value between the terminal corresponding to the reserved resource and the transmitting terminal.

24. The apparatus according to claim 22, wherein the first obtaining submodule is configured to perform at least one of the following:
excluding the target reserved resource(s) from the resource set in descending order of degrees of interference, until a quantity of remaining resources meets a second preset condition; and
excluding the target reserved resource(s) from the resource set in descending order of QoS requirements corresponding to QoS information, until a quantity of remaining resources meets the second preset condition.

25. The apparatus according to claim 24, wherein the first obtaining submodule comprises:
a second obtaining submodule, configured to adjust at least one of a first parameter and a parameter threshold to obtain an adjusted degree of interference, wherein the degree of interference is determined based on the first parameter and the parameter threshold; and
a first excluding submodule, configured to exclude the target reserved resource from the resource set based on the adjusted degree of interference.

26. The apparatus according to claim 24, wherein the second preset condition comprises at least one of the following:
the quantity of the remaining resources is within a first preset range; and
a ratio of the quantity of the remaining resources to a quantity of resources in the resource set is within a second preset range.

27. The apparatus according to claim 25, wherein the second obtaining submodule is configured to adjust at least one of the first parameter and the parameter threshold based on the quality of service QoS information of the information transmitted by the reserved resource.

28. The apparatus according to claim 19, wherein the reserved receiving resource is a reserved resource for at least one receive beam or receive panel of the receiving terminal.

29. A terminal, comprising a processor, a memory, and a program or instructions stored in the memory and capable of running on the processor, wherein when the program or instructions are executed by the processor, the steps of the resource selection method according to any one of claims 1 to 18 are implemented.

30. A readable storage medium, wherein the readable storage medium stores a program or instructions, and when the program or instructions are executed by a processor, the steps of the resource selection method according to any one of claims 1 to 18 are implemented.

31. A chip, comprising a processor and a communication interface, wherein the communication interface is coupled to the processor, and the processor is configured to run a program or instructions to implement the steps of the resource selection method according to any one of claims 1 to 18.

32. A computer program product, wherein the computer program product is stored in a non-transitory readable storage medium, and the computer program product is executed by at least one processor to implement the steps of the resource selection method according to any one of claims 1 to 18.

33. A communication device, configured to perform the steps of the resource selection method according to any one of claims 1 to 18.
